Europäisches Patentamt

European Patent Office

Office européen des brevets

(19)

(11) Numéro de publication : **0 436 251 B1**

# FASCICULE DE BREVET EUROPEEN

(12)

(45) Date de publication du fascicule du brevet :
**27.09.95 Bulletin 95/39**

(51) Int. Cl.⁶ : **H04N 7/32,** H04N 7/30,
H03M 13/00

(21) Numéro de dépôt : **90203408.1**

(22) Date de dépôt : **18.12.90**

(54) **Système de codage de signaux numériques destinés à être transmis et/ou stockés et système de décodage correspondant.**

(30) Priorité : **29.12.89 FR 8917452**
**16.02.90 FR 9001891**
**16.03.90 FR 9003406**

(43) Date de publication de la demande :
**10.07.91 Bulletin 91/28**

(45) Mention de la délivrance du brevet :
**27.09.95 Bulletin 95/39**

(84) Etats contractants désignés :
**DE FR GB**

(56) Documents cités :
**EP-A- 0 298 546**
**EP-A- 0 323 363**
**US-A- 3 971 888**
**IEE PROCEEDINGS F. COMMUNICATIONS,
RADAR & SIGNAL, vol.135, no. 6, décembre
1988, pages 528-538, Stevenage, GB; "Effect
of channel errors on source coded image data
and the provision of adequate protection of
transmission bits"
PROCEEDINGS OF THE IEEE INTERNATIO-
NAL CONFERENCE ON COMMUNICATIONS,
Amsterdam,14-17 mai 1984, vol. 1, pages
511-515, New York, US; M. GOETZE:
"Combined source-channel coding in adaptive transform coding systems for images"
INTERNATIONAL CONFERENCE ON ACOUS-
TICS, SPEECH AND SIGNAL PROCESSING -
MULTIDIMENSIONAL SIGNAL PROCESSING,
New York, 11-14 avril 1988, vol. M2, pages
1312-1315, New York, US; G. AARTSEN et al.:
"Error resilience of a video codec for low
bitrates"
MASTER'S THESIS - EINDHOVEN UNIVER-
SITY OF TECHNOLOGY, November 1986,
pages 1-52; L.M.G.M. TOLHUIZEN: "On the
optimal use and the construction of linear
block codes"**

(56) Documents cités :
**AAECC - 4, APPLICABLE ALGEBRA, ERROR
CORRECTING CODES, COMBINATORICS
ANDCOMPUTER ALGEBRA, 4TH INTERNA-
TIONAL CONFERENCE, Karlsruhe, 23-26 sep-
tembre1986, pages 43-57; T. ERICSON: "A
simple analysis of the Blokh-Zyablov decoding algorithm"**

(73) Titulaire : **LABORATOIRES D'ELECTRONIQUE
PHILIPS
22, Avenue Descartes
F-94450 Limeil-Brévannes (FR)**
(84) **FR**
Titulaire : **Philips Electronics N.V.
Groenewoudseweg 1
NL-5621 BA Eindhoven (NL)**
(84) **DE GB**

(72) Inventeur : **Fazel, Khaled
Société Civile S.P.I.D.,
156, Boulevard Haussmann
F-75008 Paris (FR)**
Inventeur : **Lhuillier, Jean-Jacques
Société Civile S.P.I.D.,
156, Boulevard Haussmann
F-75008 Paris (FR)**

(74) Mandataire : **Landousy, Christian et al
Société Civile S.P.I.D.
156, Boulevard Haussmann
F-75008 Paris (FR)**

## Description

La présente invention concerne un système de codage de signaux numériques agencés en blocs d'information, comprenant un codeur de source suivi d'un codeur de canal de transmission. Elle concerne également un système de décodage de signaux numériques ayant préalablement été traités dans un système de codage de signaux numériques agencés en blocs d'information comprenant une chaîne de codage à longueur variable suivie d'un codeur de canal comprenant lui-même un sous-ensemble de codage du type Blokh-Zyablov avec protection sélective des informations, suivi d'un codeur sans une telle protection sélective, ledit système de décodage comprenant un décodeur de canal de transmission suivi d'un décodeur de source, tel qu'une chaîne de décodage à longueur variable.

La numérisation des signaux de télévision conduit à devoir transmettre une très grande quantité d'informations binaires avec un débit de l'ordre de 220 Mbits/seconde. Un tel débit ne peut pas être assuré à un coût raisonnable par les canaux de transmission existants, et différentes techniques de codage d'informations ont été proposées en vue de réduire la quantité des informations et donc le débit. Un tel objectif est atteint, en fait, en réduisant la redondance des informations, mais, alors, chacune des informations transmises devient essentielle. Les éventuelles erreurs de transmission, qui peuvent assez facilement être corrigées si les informations à transmettre sont redondantes, ont des conséquences de plus en plus graves lorsqu'on réduit cette redondance. En effet, l'ampleur des défauts dûs aux erreurs de transmission croît malheureusement plus vite que le facteur de réduction de débit.

En présence d'un canal de transmission apportant du bruit, on a donc cherché à se protéger contre ces erreurs de transmission ou à en réduire les effets. L'une des techniques ainsi proposées consiste, pour le codage des informations, à associer à un codage réducteur du débit (aussi appelé codage de source) un codage correcteur des erreurs (aussi appelé codage de canal) permettant de protéger de façon sélective les informations les plus sensibles aux erreurs de transmission. Un système de codage assurant une telle protection est par exemple décrit dans le document "Combined source-channel coding in adaptive transform coding systems for images", Proceedings of the IEEE-ICC, Amsterdam, 14-17 mai 1984, vol.1, pages 511-515.

L'utilisation récente, dans les codeurs de source, de codes à longueur variable qui améliorent encore les performances de ces codeurs, conduit à une nouvelle diminution de la redondance des informations. De ce fait, lesdites informations sont encore plus vulnérables vis-à-vis des erreurs de transmission. D'autre part, un codage à longueur variable conduit à allouer à des blocs d'informations de mêmes dimensions un nombre de bits variable en fonction de l'information contenue dans chacun des blocs. Dans ce cas, la présence d'erreurs de transmission peut faire perdre la bonne segmentation des mots de codage correspondant à un bloc, ou même faire perdre la synchronisation entre blocs, ce qui entraîne l'apparition de motifs faux ainsi que des décalages spatiaux dans l'image.

Ces défauts sont difficiles à corriger avec les techniques actuelles de correction d'erreurs, dans la mesure où, avec un codage à longueur variable, les positions des informations importantes dans la séquence binaire ne sont pas connues. Une erreur sur les bits de poids fort de la composante continue, par exemple, est bien plus perceptible qu'une erreur sur les derniers bits d'un bloc d'informations. Mais, en raison des longueurs variables des séquences (ou mots) de codage, les techniques actuelles s'avèrent impuissantes à corriger ce type d'erreurs de façon adaptée.

Un but de l'invention est de proposer un système de codage de signaux numériques qui remédie aux défauts ci-dessus mentionnés lorsqu'on veut protéger de façon sélective des informations qui ont préalablement subi un codage à longueur variable.

A cet effet, l'invention concerne un système de codage caractérisé en ce que, le codeur de source étant une chaîne de codage à longueur variable, le codeur de canal comprend en série, pour la protection sélective des informations les plus sensibles aux erreurs de transmission, un sous-ensemble de codage avec protection sélective du type Blokh-Zyablov, suivi d'un codeur sans une telle protection sélective, ledit sous-ensemble de codage de type Blokh-Zyablov comprenant :

(A) un étage de codage de longueurs de blocs, prévu pour déterminer le long d'un bloc une longueur cumulée de mots de code issus dudit codeur de source et assurer le codage des longueurs de blocs ainsi déterminées ;

(B) un étage de protection sélective desdits blocs par codage de type Blokh-Zyablov, comprenant lui-même :

(a) un circuit de classement de bits en plusieurs classes suivant leur sensibilité aux erreurs de transmission ;

(b) des moyens de codage sélectif en fonction dudit classement, eux-mêmes composés d'un circuit de démultiplexage, puis, en parallèle, de circuits de codage sélectif en autant de niveaux de codage que de classes ainsi déterminées, et en sortie de ces circuits de codage, d'une mémoire matricielle de stockage des signaux ainsi codés ;

(c) en sortie desdits moyens de codage sélectif, un circuit de multiplication matricielle des signaux codés ainsi constitués par la matrice transposée $G^t$ de la matrice G suivante :

$$G = \begin{bmatrix} 1 & 0 & 0 & 0 & \ldots & 0 & 0 & 0 \\ 1 & 1 & 0 & 0 & \ldots & & 0 & 0 \\ 1 & 0 & 1 & 0 & \ldots & & & 0 \\ 1 & 0 & 0 & 1 & \ldots & & & 0 \\ & \ldots & \ldots & \ldots & \ldots & \ldots & \ldots \\ & \ldots & \ldots & \ldots & \ldots & \ldots & \ldots \\ & \ldots & \ldots & \ldots & \ldots & \ldots & \ldots \\ 1 & 0 & \ldots & \ldots & 1 & 0 & 0 \\ 1 & 0 & 0 & \ldots & 0 & 1 & 0 \\ 1 & 0 & 0 & 0 & \ldots & 0 & 0 & 1 \end{bmatrix}$$

(d) un circuit de raccourcissement sélectif du signal de sortie dudit circuit de multiplication matricielle, lorsque la capacité de codage dudit sous-ensemble de codage avec protection sélective est supérieure à la longueur de la quantité de signaux à coder ;

(C) un étage de multiplexage comprenant des moyens de multiplexage des signaux issus desdits étages de codage de longueurs et de protection sélective.

La structure ainsi proposée apporte une solution efficace aux problèmes mentionnés. En effet, pour une redondance moyenne souhaitable qui serait par exemple de l'ordre de 10 % pour le codeur de canal, des simulations montrent qu'un codeur à protection sélective combiné avec un codeur de source nécessiterait une complexité matérielle importante. En adoptant la structure proposée, c'est-à-dire en cascadant deux codages simples, dont l'un assure une protection à plusieurs niveaux, on réalise un compromis entre performances et complexité, et ce pour une redondance ajoutée relativement faible. Le codage sélectif de type Blokh-Zyablov a pour rôle de diminuer le taux d'erreur sur les bits des blocs de signaux résulant du codage à longueur variable, en fonction de l'importance de ces bits, tandis que le codage non sélectif est destiné à diminuer le taux d'erreur du canal à une valeur modérée, les deux codages ainsi associés se partageant la redondance affectée au codeur de canal.

Dans un mode de réalisation préférentiel, ledit système est plus particulièrement caractérisé en ce que l'étage de codage de longueurs de blocs comprend :

(A) des moyens de détermination de la longueur de chaque bloc après le codage à longueur variable, comprenant eux-mêmes :

(a) un circuit de comptage de bits, prévu pour compter le nombre de bits, pour chaque bloc, des signaux codés à longueur variable délivrés par le codeur de source en association à chaque bloc ;

(b) une mémoire de stockage de la sortie dudit circuit de comptage de bits ;

(B) des moyens de comptage du nombre de blocs dont on a déterminé la longueur, comprenant eux-mêmes :

(c) un circuit de comptage de blocs à partir de signaux de fin de bloc également délivrés par ledit codeur de source ;

(d) un circuit de décision, prévu pour commander la lecture de ladite mémoire de stockage à partir d'un nombre préenregistré de blocs ;

(C) des moyens de codage de longueurs, comprenant eux-mêmes :

(e) un circuit de codage, prévu pour délivrer les mots de codage des longueurs desdits blocs.

Comme l'utilisation d'un codage à longueur variable engendre des blocs de signaux dont la taille -c'est-à-dire le nombre de bits par bloc- varie en fonction de l'information contenue dans les blocs d'origine, il importe de mettre en place un repérage, ou synchronisation, de ces blocs de taille variable afin de permettre la distinction des informations appartenant à chacun d'entre eux. La solution consistant ici à transmettre la longueur des blocs permet de repérer aisément, ensuite, le début de chaque bloc. Ces informations de synchronisation que sont lesdites longueurs de blocs sont très importantes et sensibles, et l'on assure leur protection contre les erreurs de façon efficace si le circuit de codage des moyens de codage de longueurs est un codeur simple et puissant, par exemple un codeur binaire linéaire systématique. On obtient des résultats satisfaisants avec un codeur noté C(52,40), à mots de code de 40 bits maximum et 12 bits de parité.

Dans un mode de réalisation plus perfectionné, comme les longueurs de blocs peuvent varier sensiblement, le système de codage est alors caractérisé en ce que l'étage de multiplexage comprend également des moyens de régulation du débit des signaux de sortie desdits moyens de multiplexage, et en ce que, lorsque la longueur L du bloc considéré est supérieure à la capacité de codage K dudit étage de protection sélective, lesdits moyens de multiplexage sont prévus pour assurer également le multiplexage des (L-K) bits excédentaires non codés.

Quelles que soient les caractéristiques particulières de ces diverses réalisations, il importe d'assurer également le décodage de signaux numériques ayant préalablement subi un traitement tel que défini précédemment.

Un autre but de l'invention est donc de proposer un système de décodage apte à traiter des signaux numériques codés tels que ceux délivrés par le système de codage mentionné plus haut.

A cet effet l'invention concerne un système caractérisé en ce que le décodeur de canal comprend en série un sous-ensemble de décodage à protection non sélective suivi d'un sous-ensemble de décodage avec protection sélective comprenant lui-même :

(A) un étage de décodage de longueurs, prévu pour permettre au cours de chaque opération de décodage le décodage de ceux desdits signaux reçus qui correspondent à des longueurs de blocs :

(B) un étage de décodage des autres signaux codés reçus :

(C) en amont desdits étages de décodage prévus en parallèle, un étage de démultiplexage, prévu notamment pour l'aiguillage de signaux numériques codés reçus, soit vers ledit étage de décodage de longueurs, soit vers ledit étage de décodage des autres signaux codés ;

ledit étage de décodage des autres signaux codés reçus comprenant lui-même :

(1) des moyens de démultiplexage d'une part desdits autres signaux codés, et d'autre part des éventuels (L-K) signaux excédentaires non codés lors dudit codage avec protection sélective, lorsque la longueur L d'un bloc est supérieure à la capacité de codage K ;

(2) des moyens de décodage sélectif comprenant eux-mêmes un décodeur Blokh-Zyablov à n circuits de décodage sélectif en parallèle, composé lui-même :

(a) d'une mémoire matricielle de stockage des signaux de sortie dudit circuit de remplissage ;

(b) d'un circuit de calcul de l'expression matricielle $R_i = R - C(k_1, k_2, ..., k_{i-1}, 0, ...0)$ où R est le contenu de ladite mémoire matricielle et $C(k_1, k_2,..., k_{i-1}, 0, ...0)$ le mot de code obtenu lorsque tous les $k_i$ non encore décodés sont considérés comme égaux à zéro ;

(c) d'un circuit de multiplication matricielle, en vue de la détermination de l'expression matricielle $M_i = (G\alpha)^{-1}.R_i$ où $(G\alpha)^{-1}$ est la matrice inverse de la matrice transposée de la matrice G suivante :

$$ G \;=\; \begin{bmatrix} 1 & 0 & 0 & 0.... & 0 \\ 1 & 1 & 0 & 0..... & 0 \\ 1 & 0 & 1 & 0..... & 0 \\ 1 & 0 & 0 & 1.... & 0 \\ . & . & . & ..... & . \\ 1 & 0 & 0....... & & 1 \end{bmatrix} \quad ; $$

(d) d'un dispositif de décodage, comprenant lui-même un circuit de démultiplexage, puis, en parallèle, lesdits n circuits de décodage sélectif, suivis en série d'une mémoire matricielle de stockage des signaux décodés présents en sortie desdits circuits de décodage et d'un circuit de reconstitution de mots de code destiné à la mise à jour de l'expression $C(k_1, k_2, ..., k_{i-1}, 0, ...0)$ fournie audit circuit de calcul de l'expression matricielle $R_i$ ; et

(e) d'un circuit de détection d'erreurs de transmission, en vue de la correction du décodage effectué par ledit dispositif de décodage, ledit circuit comprenant lui-même, pour la réalisation de (n-1) cycles de détection d'erreurs, des moyens de comparaison entre d'une part les colonnes de l'expression matricielle $R_i$ et d'autre part, pour les (n-1) niveaux de protection sélective autres que le premier, les ensembles $E_2, E_3,..., E_n$ des mots formés respectivement par combinaison des (n-1) dernières lignes de la matrice G, par combinaison des (n-2) dernières lignes de G, etc..., par combinaison des deux dernières lignes de G, et, formés, pour le n-ième niveau de protection sélective, à partir de la dernière ligne de G ;

(3) entre lesdits moyens de démultiplexage et de décodage sélectif, des moyens de raccourcissement inverse, pour ajuster le format des signaux à décoder à la capacité desdits moyens de décodage sélectif lorsque la longueur L d'un bloc est inférieure à ladite capacité de codage K ;

(4) des moyens de reclassement des signaux décodés suivant leur sensibilité aux erreurs de transmission ;

(5) des moyens de mémorisation des signaux ainsi reclassés.

Les particularités et avantages de l'invention apparaîtront maintenant de façon plus précise dans la description qui suit et dans les dessins annexés, donnés à titre d'exemples non limitatifs et dans lesquels :

- la figure 1 est un schéma de principe montrant, dans une chaîne de transmission de signaux numériques, les combinaisons codeur de source/codeur de canal et décodeur de canal/décodeur de source ;
- la figure 2 montre un exemple de réalisation des circuits d'un système de codage selon l'invention ;
- les figures 3 et 4 montrent respectivement un exemple de réalisation de l'étage de codage de longueurs et de l'étage de protection sélective du système de codage de la figure 2 ;
- la figure 5 montre un exemple de réalisation du circuit de codage sélectif de l'étage de protection sélective représenté sur la figure 4 ;
- la figure 6 montre un exemple de réalisation des circuits d'un système de décodage selon l'invention ;
- les figures 7 et 8 montrent respectivement un exemple de réalisation de l'étage de décodage de longueurs et de l'étage de décodage des autres signaux codés du système de décodage de la figure 6 ;
- la figure 9 montre un exemple de réalisation des moyens de décodage sélectif prévus dans l'étage de décodage de la figure 8.

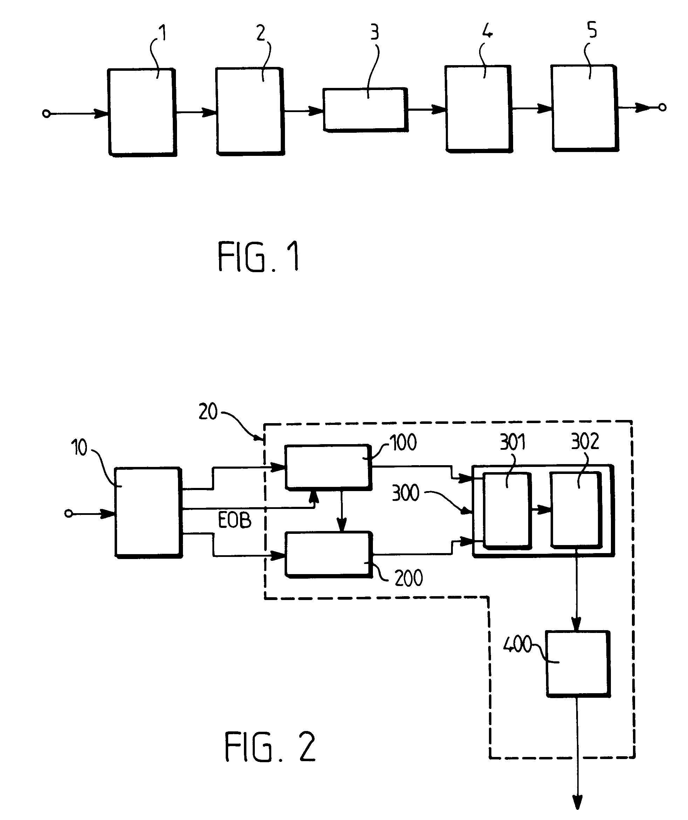

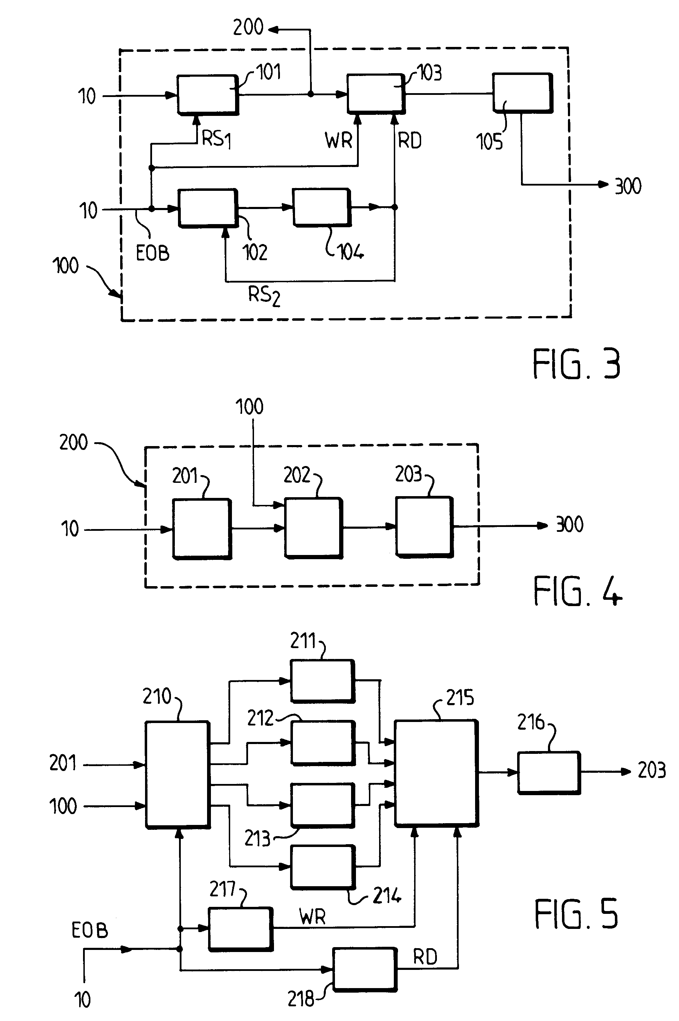

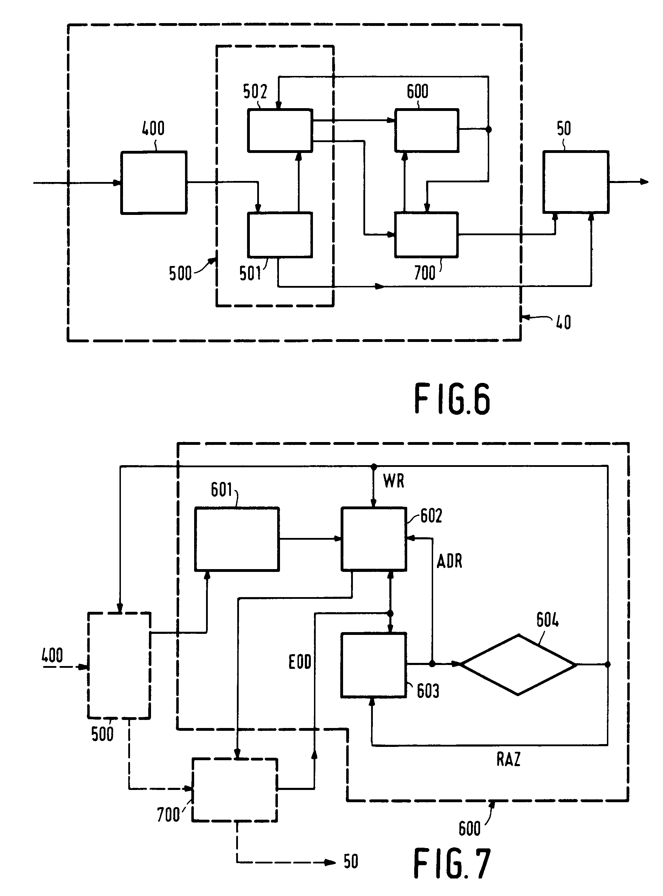

Comme on l'a vu plus haut, une technique connue de protection contre les erreurs de transmission consiste à associer à un codeur de source un codeur de canal. Cette technique est schématisée sur la figure 1 qui comprend d'une part un codeur de source 1 et, entre celui-ci et un canal de transmission 3, un codeur de canal 2. De façon symétrique, on trouve en sortie du canal 3 un décodeur de canal 4 puis un décodeur de source 5. Dans la présente description, on mentionnera tout d'abord ce qui a trait à la partie codage, en décrivant à l'aide des figures 2 à 5 un exemple de système de codage selon l'invention, puis tout ce qui a trait à la partie décodage située en aval du canal, c'est-à-dire l'ensemble constitué par le décodeur de canal et le décodeur de source, en référence aux figures 6 à 9.

Le système de codage représenté sur la figure 2 comprend d'abord une chaîne 10 de codage à longueur variable. Cette chaîne 10 constitue le codeur de source et comprend essentiellement, de façon classique, un circuit de transformation orthogonale et quantification, un circuit de codage à longueur variable, et un circuit de régulation de débit incluant une mémoire-tampon. Le système de codage comprend ensuite un codeur de canal 20, comprenant lui-même en série un sous-ensemble de codage avec protection sélective et un sous-ensemble de codage sans protection sélective.

Le sous-ensemble de codage avec protection sélective comprend, plus particulièrement, un étage 100 de codage de longueurs cumulées des mots de code d'un bloc (on rendra la description plus concise en parlant de longueurs de blocs) issus de la chaîne de codage 10, un étage 200 de protection sélective des blocs d'informations issus de la chaîne de codage 10, et un étage 300 de multiplexage des signaux issus desdits étages 100 et 200 de codage de longueurs et de protection sélective.

On entend, par blocs d'informations, des sous-ensembles de signaux de mêmes dimensions, résultant d'une subdivision des lots d'informations (par exemple des images de télévision) considérés initialement. Ces blocs d'informations, après ladite transformation orthogonale, peuvent, par des opérations de comparaison à des seuils, être classés selon leur plus ou moins grande activité (liée aux contours, aux contrastes, à la plus ou moins grande uniformité des blocs), et un signal exprimant cette classification est alors émis par le circuit de transformation orthogonale et quantification, et transmis. De même, le circuit de régulation de débit comprend une boucle de rétroaction véhiculant un signal de normalisation qui doit être également transmis. Ces signaux de classification et de normalisation sont en effet utiles, côté réception, pour réaliser les opérations inverses de celles prévues à l'émission, en vue de la reconstruction des blocs et de la reconstitution de lots d'informations similaires aux lots d'informations initiaux.

L'étage 100 de codage de longueurs de blocs représenté sur la figure 3 comprend des moyens (101,103) de détermination de la longueur de chaque bloc après le codage à longueur variable, des moyens (102, 104) de comptage du nombre de blocs dont on déterminé la longueur, et des moyens de codage de longueurs. Plus précisément, cet étage 100 comprend tout d'abord un circuit 101 de comptage des bits correspondant à un bloc et un circuit de comptage de blocs 102. Un signal EOB de fin de bloc est fourni par le circuit de transformation orthogonale et quantification de la chaîne 10 au circuit de comptage de blocs 102, dont le contenu augmente d'une unité à chaque réception de signal EOB. La longueur de bloc déterminée par le circuit 101 est stockée dans une mémoire 103, et le circuit de comptage 101, remis à zéro par commande du signal EOB (connexion $RS_1$), est disponible pour un nouveau comptage de longueur de bloc. L'écriture en mémoire 103 (connexion WR) est commandée par le signal EOB.

Un circuit de décision 104 détermine, par comparaison à un nombre préenregistré, à partir de quel nombre de blocs -et donc de longueurs déterminées- la mémoire 103 peut être lue. Ce circuit 104, qui est un comparateur, est placé en sortie du circuit de comptage de blocs 102 et délivre (connexion RD) un signal de commande de lecture de la mémoire 103 au moment où le contenu du circuit 102 (le nombre de blocs dont on a déterminé les longueurs) est égal au nombre préenregistré. Ce signal de commande de lecture est aussi renvoyé vers le circuit 102 pour sa remise à zéro (connexion $RS_2$). Le nombre préenregistré est par exemple égal à 4, et la lecture de la mémoire 103 intervient donc lorsque quatre longueurs ont été déterminées et successivement mémorisées.

Ces quatre longueurs de blocs, qui représentent au maximum 40 bits d'information lorsque le circuit de comptage de bits 101 est un compteur 10 bits, sont fournies en séquence à un circuit de codage de longueurs 105. Ce circuit 105 est un codeur binaire linéaire systématique, dit codeur "en bloc", choisi pour son aptitude à corriger y erreurs pour x informations reçues : le nombre x de bits reçus fournis par la mémoire 103 au circuit de codage 105 étant, on l'a vu, au plus égal à 40, le nombre maximal d'erreurs que l'on veut corriger pour un tel nombre d'informations reçues est égal à 2, et le code binaire alors choisi est noté C(52, 40), 40 représentant le nombre maximal de bits reçus et les 12 bits restants étant des bits de parité. La sortie du circuit de codage 105 constitue celle de l'étage 100 de codage des longueurs de blocs.

L'étage 200 de protection sélective des blocs d'informations, représenté sur la figure 4, comprend tout d'abord une mémoire 201, constituant un circuit de classement de bits suivant la sensibilité de ces derniers aux erreurs provoquées par le canal de transmission. Pour les mots de code résultant d'un codage à longueur variable, cette sensibilité est déterminée à partir d'analyses statistiques préalables, dont les résultats sont groupés dans une table associée à la mémoire 201. Les bits délivrés par la chaîne 10 de codage à longueur variable sont stockés dans la mémoire 201 et ensuite relus suivant une séquence d'adresses contenues dans la table, en vue d'une remise en ordre de ces bits (en général par ordre de sensibilité décroissante), qui sont alors fournis à un circuit de codage sélectif en fonction dudit classement, tel qu'un codeur 202 dit Blokh-Zyablov, choisi pour son aptitude à permettre plusieurs niveaux de codage selon le classement de bits effectué.

Dans tous les cas, ce codeur 202 est capable de coder au plus K bits. Si la longueur L d'un bloc d'informations est inférieure à cette capacité de codage K, les (K-L) bits non utilisés donnent lieu à une mise à zéro dans la chaîne d'informations de longueur K traitée par le codeur Blokh-Zyablov 202. Si au contraire la longueur L est supérieure à la capacité K, seuls K bits sont codés. Les (L-K) bits restants ne sont pas codés et sont multiplexés avec les mots de code délivrés par le codeur Blokh-Zyablov, dans l'étage de multiplexage 300.

Dans le cas présent, on a choisi de disposer par exemple de quatre niveaux de codage, c'est-à-dire d'une protection sélective à quatre niveaux. Le codeur 202, représenté sur la figure 5, comprend alors, tout d'abord, un circuit de démultiplexage 210, puis, en parallèle, quatre circuits 211 à 214 de codage sélectif recevant chacun les bits qui lui sont affectés par le circuit 210. Dans l'exemple décrit, la capacité de codage K du codeur 202 est de 489 bits, et lesdits circuits de codage sélectif reçoivent respectivement, au plus, les signaux suivants, correspondant à chaque niveau de protection :

- circuit 211 : 113 bits (niveau 1 de protection), représentant les bits les plus importants dans chaque bloc ;
- circuit 212 : 125 bits (niveau 2) ;
- circuit 213 : 125 bits (niveau 3) ;
- circuit 214 : 126 bits (niveau 4) représentant les bits les moins importants dans chaque bloc. Si la longueur d'un bloc est supérieure à 489 bits, les bits supplémentaires ne sont pas codés, ni protégés.

En sortie de ces quatre circuits de codage 211 à 214 est ensuite prévue une mémoire matricielle 215 de stockage des signaux codés de sortie de ces circuits, puis un circuit 216 de multiplication matricielle du contenu de la mémoire 215 par la matrice transposée $G^t$ de la matrice G suivante :

$$G = \begin{bmatrix} 1 & 0 & 0 & 0 \\ 1 & 1 & 0 & 0 \\ 1 & 0 & 1 & 0 \\ 1 & 0 & 0 & 1 \end{bmatrix}$$

La mémoire matricielle 215 comprend 4 lignes, autant que de niveaux de protection sélective, et 127 colonnes. Ce format est également celui de la matrice, notée C, du résultat de ladite multiplication matricielle.

Les signaux EOB de fin de bloc déjà mentionnés assurent la commande d'écriture, puis de lecture de la mémoire 215. Des circuits à retard 217 et 218 sont intercalés dans les connexions de commande d'écriture et de lecture, respectivement WR et RD, de la mémoire 215 pour tenir compte de la durée des opérations de codage sélectif et synchroniser ces deux commandes par rapport aux signaux à mémoriser puis à lire.

La sortie du circuit 216, qui constitue celle du codeur 202, est fournie à un circuit de raccourcissement 203, permettant de supprimer, éventuellement, c'est-à-dire s'ils existent, les (K-L) bits mis à zéro, et la sortie de ce circuit 203, qui constitue celle de l'étage 200, est alors envoyée vers l'étage de multiplexage 300.

Le fonctionnement du codeur 202 est le suivant. Soit $k_i$ le nombre de bits pour chacun des niveaux de codage, avec i = 1 à 4 dans le cas de quatre niveaux de codage. Les nombres $k_1$, $k_2$, $k_3$, $k_4$ étant associés respectivement à chacun des quatre niveaux, on ajoute alors à chacun des $k_i$ bits un nombre $m_i$ correspondant de bits de parité lié au degré de protection recherché pour chaque niveau. Dans l'exemple décrit, on a choisi $m_1 = 14$, $m_2 = 2$, $m_3 = 2$, $m_4 = 1$, le choix des couples ($m_i$, $k_i$) devant permettre le rangement des mots de code ainsi constitués dans la mémoire 215, avec une disposition qui est la suivante, en appelant M la matrice correspondant au contenu de cette mémoire :

$$
M = \begin{bmatrix}
(\ldots\ldots\ m_1\ldots) & (\ldots\ldots\ldots\ldots k_1\ldots\ldots\ldots) \\
(\ldots\ldots m_2\ldots) & (\ldots\ldots\ldots\ k_2\ldots\ldots\ldots) \\
(\ldots m_3\ldots) & (\ldots\ldots\ldots k_3\ldots\ldots\ldots) \\
(\ldots m_4\ldots) & (\ldots\ldots\ldots k_4\ldots\ldots\ldots)
\end{bmatrix}
$$

Pour le codeur ici décrit, à quatre niveaux de protection, les mots de code sont obtenus en multipliant par cette matrice M la transposée $G^t$ de la matrice G :

$$
G^t = \begin{bmatrix}
1 & 1 & 1 & 1 \\
0 & 1 & 0 & 0 \\
0 & 0 & 1 & 0 \\
0 & 0 & 0 & 1
\end{bmatrix}
$$

ce qui donne :

$$
C = G^t M = \begin{bmatrix}
(\ldots\ldots\ldots\ldots\ldots \text{ligne 1}\ldots\ldots\ldots) \\
(\ldots\ldots\ m_2\ldots) & (\ldots\ldots\ k_2\ldots) \\
(\ldots\ldots m_3\ldots) & (\ldots\ldots k_3\ldots) \\
(\ldots\ldots m_4\ldots) & (\ldots\ldots k_4\ldots)
\end{bmatrix}
$$

Comme on le constate, du fait de la structure de la matrice G qui ne diffère de la matrice unité que par le contenu de sa première colonne, le mot de code produit par bloc (constitué par la succession $C_1$ à $C_4$ des quatre lignes de la matrice C ci-dessus) est quasi-systématique puisque la multiplication matricielle effectuée a conduit, pour la ligne 1 non portée en détail par souci de simplification, à une combinaison linéaire de bits masquant une partie des bits initiaux et réalisant donc une perte de ces bits d'information. Cependant, on retrouve quand même une partie des bits d'information dans les lignes suivantes, ce qui facilite le processus de raccourcissement ultérieur dans le circuit de raccourcissement 203.

Dans le cas où les longueurs de bloc sont inférieures ou égales à la capacité de codage K, tous les bits reçus par le codeur 202 sont codés. Lorsqu'au contraire ces longueurs sont supérieures à K, l'étage 300 assure, on l'a vu, non seulement le multiplexage des signaux issus des étages de codage de longueurs et de protection sélective, mais aussi celui des (L-K) bits excédentaires qui n'ont pas pu être codés par le codeur 202. Le multiplexage est réalisé, dans l'un ou l'autre cas, par un multiplexeur 301, et ce dernier est suivi d'une mémoire-tampon 302 prévue pour assurer la régulation du débit des signaux de sortie du sous-ensemble de codage avec protection sélective. Bien entendu, lorsque la chaîne 10 de codage à longueur variable comprend un circuit de régulation de débit, il est possible de regrouper ces moyens de régulation de débit et ledit circuit de régulation de débit de la chaîne 10 en un unique sous-ensemble de régulation de débit.

Le sous-ensemble de codage sans protection sélective, référencé 400 et prévu ensuite, est en général différent selon que le canal de transmission a ou non une mémoire. Lorsque ce canal a une mémoire, c'est-à-dire lorsque les erreurs surviennent par paquets, ce sous-ensemble de codage est, de préférence, un codeur de type Reed-Solomon, avec alors la présence éventuelle d'un entrelaceur par symbole, dans la chaîne de transmission, pour réaliser l'adaptation entre la longueur des paquets d'erreur et le nombre de bits constituant les symboles du code Reed-Solomon. Dans le cas où au contraire le canal est sans mémoire, le sous-ensemble de codage sans protection sélective est plutôt un codeur de type BCH binaire, mieux adapté à la correction d'erreurs dont les positions sont tout à fait aléatoires. Ces codes Reed-Solomon et BCH sont par exemple décrits dans l'ouvrage "Theory and practice of error control codes", R. Blahut, Addison-Wesley Publishing Company, mai 1984.

Lorsqu'un codage de signaux numériques a donc été effectué dans un ensemble de codage du type de celui qui a été détaillé dans la description précédente, les signaux numériques ainsi codés, puis transmis et/ou stockés, peuvent réciproquement être décodés, selon l'invention, dans un système de décodage tel que celui représenté par exemple sur la figure 6.

Ce système de décodage de la figure 6 comprend un décodeur de canal de transmission 40 suivi d'un décodeur de source 50. Le décodeur de canal 40 comprend lui-même, en série un sous-ensemble de décodage à protection non sélective, référencé 400, et un sous-ensemble de décodage à protection sélective. Le sous-ensemble de décodage avec protection sélective comprend ici, plus particulièrement, un étage 500 de démultiplexage pour l'aiguillage des signaux numériques codés reçus par le système de décodage, un étage 600 de décodage de longueurs, pour le décodage de ceux de ces signaux codés reçus qui correspondent aux longueurs déterminées dans l'étage 100 du codeur de canal 20, et un étage 700 de décodage des autres signaux codés reçus. Le sous-ensemble de décodage sans protection sélective reçoit les signaux d'entrée du système, c'est-à-dire des signaux dont le multiplexage avait été effectué par l'étage 300 du codeur de canal 20, à savoir : d'une part les signaux numériques constituant, après codage dans l'étage 100, les mots de code correspondant aux longueurs des parties variables des blocs, d'autre part les signaux numériques qui constituent les mots de code résultant de la protection sélective des blocs et provenant de l'étage 200. Ce sous-ensemble de décodage sans protection sélective comprend, comme précédemment pour le codage, des circuits différents selon le type de canal de transmission et peut être, par exemple un décodeur de type Reed-Solomon ou un décodeur de type BCH binaire.

L'étage de démultiplexage 500 comprend d'une part des moyens de modification du débit des signaux reçus, consistant ici en une mémoire-tampon 501 qui reçoit les signaux de sortie du sous-ensemble de décodage sans protection sélective, et d'autre part des moyens de séparation de signaux, consistant ici en un démultiplexeur 502 assurant un aiguillage des signaux de sortie de cette mémoire soit vers l'étage de décodage 600, soit vers l'étage de décodage 700. Ces signaux reçus par l'étage 500 sont des signaux correspondant, après transmission et traversée du sous-ensemble 400, respectivement aux signaux codés de sortie de l'étage 100 de codage de longueurs et aux signaux codés de sortie de l'étage 200 de protection sélective.

L'étage de décodage de longueurs 600, représenté sur la figure 7, comprend des moyens de décodage des signaux codés correspondant à des longueurs et des moyens de cadencement dudit décodage. Plus précisément, il comprend ici tout d'abord, dans l'exemple de réalisation décrit, un circuit 601 de décodage de longueurs assurant les opérations inverses du circuit de codage 105, c'est-à-dire, en l'occurrence, le décodage de mots de code correspondant aux longueurs de quatre blocs. Les signaux ainsi décodés sont rangés dans une mémoire 602, dont la lecture intervient à chaque fin de décodage de l'étage de décodage 700, sur commande d'un signal EOD de fin de décodage de bloc fourni par ledit étage 700. Ce signal EOD est également fourni à un circuit de comptage de blocs 603 qui commande, après un décodage de quatre longueurs de blocs, la réinitialisation du processus en vue du décodage relatif aux quatre blocs suivants. Un comparateur 604 assure ici l'arrêt du comptage du nombre de blocs, et c'est la sortie de ce comparateur qui constitue le signal de commande de réinitialisation, envoyé vers l'étage de démultiplexage 500, ainsi que vers le circuit de comptage de blocs 603 pour sa remise à zéro (RAZ), et vers la mémoire 602 en tant que commande d'écriture (WR).

Le signal de sortie de la mémoire 602 lue à l'adresse ADR fournie par le circuit 603, qui constitue également le signal de sortie de l'étage de décodage 600 et qui est la longueur de chaque bloc, est fourni à l'étage 700 de décodage des autres signaux codés.

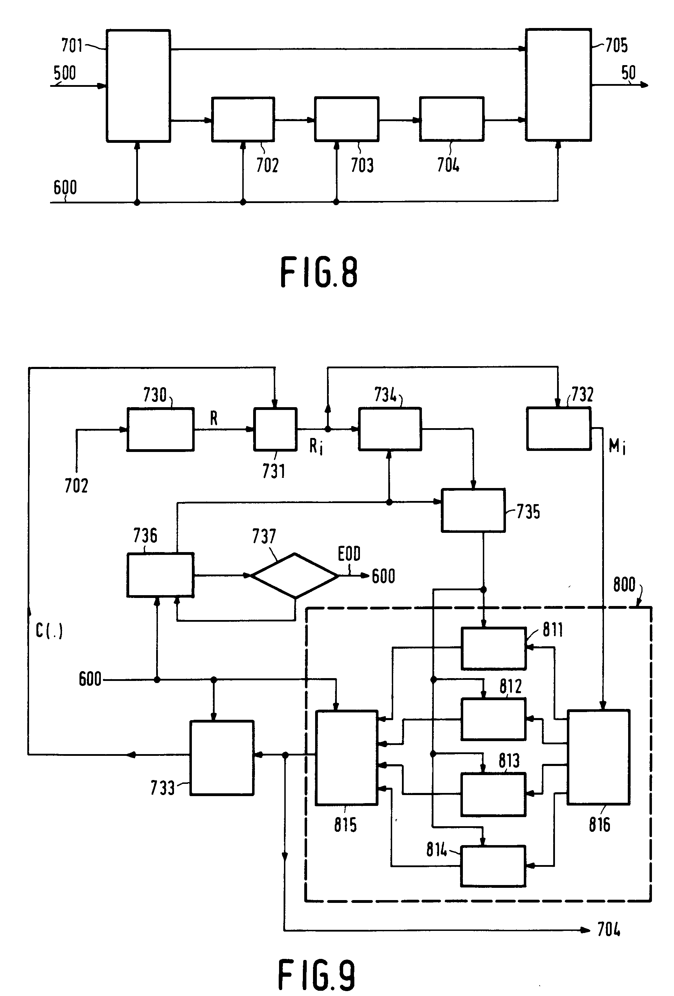

Cet étage 700, représenté sur la figure 8, comprend tout d'abord des moyens de démultiplexage consistant ici en un circuit de démultiplexage 701. En effet, on sait que, lorsque la longueur L d'un bloc d'informations, avant transmission, est supérieure à la capacité K de l'étage 200 de protection sélective, les (L-K) bits restants, non codés par cet étage, sont multiplexés avec les mots de code résultant du codage des K premiers bits et délivrés par ledit étage. L'opération inverse de démultiplexage doit alors être prévue, dans cette situation, et c'est le rôle du circuit 701. Lorsqu'au contraire la longueur L n'est pas supérieure à K, le circuit 701 n'a aucun démultiplexage à opérer et laisse passer la totalité des mots de code délivrés par l'étage 200 et ayant, ensuite, traversé le sous-ensemble 400 et l'étage 500.

Le circuit de démultiplexage 701 est suivi de moyens de raccourcissement inverse consistant ici en un circuit dit de remplissage 702 destiné à effectuer un traitement inverse de l'opération dite de raccourcissement réalisée à l'émission en sortie du codeur Blokh-Zyablov 202 (après la mise à zéro des (K-L) bits non utilisés, quand ils existent dans la chaîne d'informations de longueur K traitée par ce codeur 202). Le circuit 702 a pour fonction de compléter le nombre de bits manquant au mot de code reçu, après le codage effectué dans le codeur Blokh-Zyablov 202. Ce manque résulte, on peut le rappeler, du processus de raccourcissement effectué à l'émission lorsque la longueur L d'un bloc d'informations est inférieure à la capacité K de l'étage de protection sélective. Si le nombre de bits d'un bloc est inférieur au nombre de bits maximal du mot de code du codeur 202 (par exemple 508 bits, dans l'exemple décrit, pour ce nombre maximal), on ajoute le nombre de zéros nécessaire pour disposer d'un mot de code complet. Dans le cas contraire, le circuit 702 est transparent, il n'effectue aucun traitement.

Ce circuit 702 est suivi de moyens de décodage sélectif qui, dans l'exemple décrit, consistent en un décodeur à protection sélective tel qu'un décodeur 703 dit de Blokh-Zyablov. Ce décodeur 703 réalise les traitements inverses des opérations de codage effectuées à l'émission par le circuit de codage sélectif. Le décodeur 703, représenté sur la figure 9 et décrit de façon détaillée ci-dessous, est suivi de moyens de reclassement consistant ici en un circuit 704 de remise en ordre inverse de celle opérée par la mémoire 201 de classement de bits. Ces moyens de reclassement sont eux-mêmes suivis de moyens de mémorisation tels qu'une mémoire 705. La sortie de cette mémoire 705 constitue la sortie de l'étage de décodage 700, envoyée vers le décodeur de source 50. Le signal de sortie de la mémoire 602, qui est, comme on l'a vu, la longueur de chaque bloc, est fourni, dans l'étage de décodage 700, au circuit de démultiplexage 701, au circuit de remplissage 702, au décodeur 703, et à la mémoire 705.

Dans le mode de réalisation de la figure 9, le décodeur Blokh-Zyablov 703 repose sur le principe de fonctionnement suivant. On appelle R le mot de code reçu : comme on l'a vu, ce mot de code a une forme matricielle à 4 lignes et 127 colonnes et est composé de la somme de deux matrices 4, 127 :

$$[R] \ = \ [C] \ + \ [E]$$

où C est le mot de code réellement délivré par le codeur Blokh-Zyablov à l'émission et E l'erreur de transmission. Le principe de décodage de R consiste en une estimation successive des $k_i$, les nombres de bits pour chacun des niveaux de codage sélectif (avec i = 1 à 4 dans le cas de 4 niveaux de codage) : le résultat de l'estimation des $k_i$ bits du niveau de protection i permet d'estimer les $k_{i+1}$ bits suivants du niveau i+1. De fait, l'estimation des $k_i$ bits est faite en déterminant l'expression :

$$R_i \ = \ R \ - \ C \, (k_1,...,k_{i-1}, 0,..., 0)$$

dans laquelle $C(k_1,..., k_{i-1}, 0,...,0)$ est le mot de code obtenu lorsque tous les $k_i$ non encore décodés sont considérés comme égaux à zéro.

Le processus de décodage des $k_i$ bits est, plus précisément, le suivant :

(a) on calcule $R_i \ = \ R \ - \ C(k_1,..., k_{i-1}, 0,...,0)$. Dans le cas où i = 1 à 4, cela revient à calculer successivement :

$$R_1 \ = \ R - C \, (0, 0, 0,..., 0)$$
$$R_2 \ = \ R - C \, (k_1, 0, 0,..., 0)$$
$$R_3 \ = \ R - C \, (k_1, k_2, 0,..., 0), \text{etc.}$$

(b) on détecte les éventuelles erreurs dans les colonnes de $R_i$. Cette détection est réalisée de la façon suivante. Soit la matrice G déjà nommée : à partir de ses quatre lignes, on définit les ensembles $E_1$, $E_2$, $E_3$, $E_4$ des mots formés respectivement par combinaison des quatres lignes 1000, 1100, 1010, 1001 de cette matrice G, par combinaison des trois dernières lignes de la matrice G, par combinaison des deux dernières lignes de la matrice G, et à partir de la dernière ligne de G. Ces ensembles $E_1$, $E_2$, $E_3$, $E_4$ contiennent donc respectivement 16, 8, 4, et 2 éléments. La détection d'erreurs est effectuée en comparant les colonnes de la matrice $R_i$ avec chaque élément de l'ensemble $E_i$. Si l'une des colonnes est absente de cet ensemble, c'est dans cette colonne que se situe une erreur, et l'adresse de cette colonne associée à une détection d'erreur est stockée (cette adresse varie de 1 à 127 dans le cas où la matrice R est à 127 colonnes).

(c) on calcule la matrice $M_i \ = \ (G^t)^{-1}.R_i$, expression dans laquelle $(G^t)^{-1}$ est la matrice inverse de la matrice transposée $G^t$. Ce calcul permet de retrouver la i-ième ligne de la matrice M contenant les informations codées $k_i$ (non entachée d'erreurs).

(d) cette i-ème ligne de $M_i$ est estimée d'une part à partir des mots de code ainsi déterminés et d'autre part à partir des adresses de colonnes associées à des détections d'erreurs, et les valeurs $k_i$ ainsi déterminées sont mémorisées, pour reconstituer la nouvelle expression C permettant de reprendre un nouveau calcul de $R_i$ (reprise des opérations (a) à (d) qui viennent d'être mentionnées), et ainsi de suite jusqu'à ce que le processus ait ainsi assuré le décodage à tous les niveaux de protection sélective, par estimations successives de tous les $k_i$.

Le processus ainsi décrit est mis en oeuvre dans les circuits suivants du décodeur Blokh-Zyablov 703 tel que représenté sur la figure 9 et qui comprend ici quatre niveaux de protection sélective. Tout d'abord, les signaux de sortie du circuit de remplissage 702, qui constituent les signaux d'entrée du décodeur 703, sont stockés dans une mémoire matricielle 730, contenant donc l'expression appelée R ci-dessus. Cette mémoire matricielle 730 est suivie d'un circuit 731 de calcul de $R_i$, puis d'un circuit 732 de multiplication matricielle pour obtenir l'expression matricielle $M_i$, alors envoyée vers le dispositif de décodage proprement dit du décodeur 703.

Ce dispositif de décodage, référencé 800, comprend, de façon comparable avec le dispositif de codage (210, 211, 212, 213, 214, 215) représenté sur la figure 5, tout d'abord un circuit de démultiplexage 810, puis, en parallèle, quatre circuits 811 à 814 de décodage sélectif recevant chacun les bits qui lui sont affectés par le circuit 810. En sortie des quatre circuits de décodage 811 à 814 est ensuite prévue une mémoire matricielle 815 de stockage des signaux décodés de sortie de ces circuits. La sortie de cette mémoire 815 est fournie d'une part à un circuit 733 de reconstitution de mot de code destiné à la mise à jour de l'expression $C(k_1,..., k_{i-1}, 0, ..., 0)$ notée en abrégé C(.) sur la figure 9, en vue de la nouvelle étape du processus de détermination des $k_{i+1}$ bits suivants. D'autre part, lorsque tous les k bits correspondant à chaque niveau de protection d'un bloc ont été décodés, la sortie de la mémoire 815 est également envoyée, en tant que sortie du décodeur Blokh-Zyablov 703, vers les moyens de reclassement, ici le circuit de remise en ordre inverse 704.

Pour ce traitement d'estimations successives des k bits, on a vu plus haut qu'une étape de détection des erreurs de transmission était indispensable. Ladite fonction de détection est réalisée à l'aide d'un circuit 734 de détection d'erreurs de transmission prévu en sortie du circuit 731 de calcul de $R_i$, en parallèle sur la voie conduisant au dispositif de décodage 800 par l'intermédiaire du circuit 732. Ce circuit 734 comprend, pour la réalisation de (n-1) cycles de détection d'erreurs, des moyens de comparaison entre d'une part les colonnes de l'expression matricielle $R_i$ et d'autre part, pour les (n-1) niveaux de protection sélective autres que le premier, les ensembles $E_2$, $E_3$, ..., $E_n$ des mots formés respectivement par combinaison des (n-1) dernières lignes de la matrice G, par combinaison des (n-2) dernières lignes de G, etc..., par combinaison des deux dernières lignes de G, et formés, pour le n-ième niveau de protection sélective, à partir de la dernière ligne de G. Lorsque la présence d'une erreur dans une colonne est détectée, son adresse (ici de 1 à 127) est stockée dans un circuit 735 de mémorisation desdites adresses de colonne. Il faut noter ici que, dans l'ensemble $E_1$ à 16 éléments contenant toutes les combinaisons possibles des quatre lignes de la matrice G, on retrouve toutes les colonnes de $R_1$, et donc que, pour le premier niveau de protection sélective, la détection opérée par le circuit 734 est inexistante. Pour ce niveau de protection, le circuit de détection d'erreurs 734 est transparent.

On prévoit enfin, dans le décodeur 703 de la figure 9, un compteur 736 du nombre de niveaux de protection sélective ainsi qu'un comparateur 737 assurant l'arrêt du comptage du nombre de niveaux et l'émission d'un signal EOD de fin de décodage.

## Revendications

1. Système de codage de signaux numériques agencés en blocs d'information, comprenant un codeur de source suivi d'un codeur de canal de transmission et caractérisé en ce que, le codeur de source étant une chaîne de codage à longueur variable, le codeur de canal comprend en série, pour la protection sélective des informations les plus sensibles aux erreurs de transmission, un sous-ensemble de codage avec protection sélective du type Blokh-Zyablov, suivi d'un codeur sans une telle protection sélective, ledit sous-ensemble de codage de type Blokh-Zyablov comprenant :

(A) un étage (100) de codage de longueurs de blocs, prévu pour déterminer le long d'un bloc une longueur cumulée de mots de code issus dudit codeur de source et assurer le codage des longueurs de blocs ainsi déterminées ;

(B) un étage (200) de protection sélective desdits blocs par codage de type Blokh-Zyablov, comprenant lui-même :

(a) un circuit de classement de bits en plusieurs classes suivant leur sensibilité aux erreurs de transmission ;

(b) des moyens (102) de codage sélectif en fonction dudit classement, eux-mêmes composés d'un circuit (210) de démultiplexage, puis, en parallèle, de circuits (211, 212, 213, 214) de codage sélectif en autant de niveaux de codage que de classes ainsi déterminées, et en sortie de ces circuits de codage, d'une mémoire matricielle (215) de stockage des signaux ainsi codés ;

(c) en sortie desdits moyens de codage sélectif, un circuit (216) de multiplication matricielle des signaux codés ainsi constitués par la matrice transposée $G^t$ de la matrice G suivante :

$$G = \begin{bmatrix} 1 & 0 & 0 & 0 & \dots & 0 & 0 & 0 \\ 1 & 1 & 0 & 0 & \dots & & 0 & 0 \\ 1 & 0 & 1 & 0 & \dots & & & 0 \\ 1 & 0 & 0 & 1 & \dots & & & 0 \\ & & \dots & & \dots & & & \\ & & \dots & & \dots & & & \\ & & \dots & & \dots & & & \\ 1 & 0 & & \dots & 1 & 0 & 0 \\ 1 & 0 & 0 & \dots & 0 & 1 & 0 \\ 1 & 0 & 0 & 0 & \dots & 0 & 0 & 1 \end{bmatrix}$$

(d) un circuit (203) de raccourcissement sélectif du signal de sortie dudit circuit de multiplication matricielle, lorsque la capacité de codage dudit sous-ensemble de codage avec protection sélective est supérieure à la longueur de la quantité de signaux à coder ;

(C) un étage de multiplexage (300) comprenant des moyens de multiplexage des signaux issus desdits étages (100, 200) de codage de longueurs et de protection sélective.

2. Système de codage selon la revendication 1, caractérisé en ce que l'étage (100) de codage de longueurs de blocs comprend :

(A) des moyens de détermination de la longueur de chaque bloc après le codage à longueur variable, comprenant eux-mêmes :

(a) un circuit (101) de comptage de bits, prévu pour compter le nombre de bits, pour chaque bloc, des signaux codés à longueur variable délivrés par le codeur de source en association à chaque bloc ;

(b) une mémoire (103) de stockage de la sortie dudit circuit de comptage de bits ;

(B) des moyens de comptage du nombre de blocs dont on a déterminé la longueur, comprenant eux-mêmes :

(c) un circuit (102) de comptage de blocs à partir de signaux de fin de bloc également délivrés par ledit codeur de source ;

(d) un circuit de décision (104), prévu pour commander la lecture de ladite mémoire de stockage à partir d'un nombre préenregistré de blocs ;

(C) des moyens de codage de longueurs, comprenant eux-mêmes :

(e) un circuit de codage (105), prévu pour délivrer les mots de codage des longueurs desdits blocs.

3. Système de codage selon l'une des revendications 1 et 2, caractérisé en ce que l'étage de multiplexage comprend également des moyens (302) de régulation du débit des signaux de sortie desdits moyens de multiplexage, et en ce que, lorsque la longueur L du bloc considéré est supérieure à la capacité de codage K dudit étage de protection sélective, lesdits moyens de multiplexage sont prévus pour assurer également le multiplexage des (L-K) bits excédentaires non codés.

4. Système de codage selon l'une des revendications 1 à 3, caractérisé en ce que le circuit de classement de bits comprend une mémoire (201), prévue pour recevoir, dans une première zone de mémoire, les signaux codés à longueur variable issus du codeur de source et, dans une deuxième zone de mémoire et en vue de l'adressage de ladite première zone de mémoire pour délivrer lesdits signaux codés dans un ordre modifié en fonction dudit adressage, le rang desdits signaux codés.

5. Système de décodage de signaux numériques ayant préalablement été traités dans un système de codage de signaux numériques agencés en blocs d'information comprenant une chaîne de codage à longueur variable suivie d'un codeur de canal comprenant lui-même un sous-ensemble de codage du type Blokh-Zyablov avec protection sélective des informations, suivi d'un codeur sans une telle protection sélective, ledit système de décodage comprenant un décodeur de canal de transmission (40) suivi d'un décodeur de source (50) tel qu'une chaîne de décodage à longueur variable, caractérisé en ce que le décodeur de canal comprend en série un sous-ensemble (400) de décodage à protection non sélective suivi d'un sous-ensemble de décodage avec protection sélective comprenant lui-même :

(A) un étage (600) de décodage de longueurs, prévu pour permettre au cours de chaque opération de décodage le décodage de ceux desdits signaux reçus qui correspondent à des longueurs de blocs :

(B) un étage (700) de décodage des autres signaux codés reçus :

(C) en amont desdits étages de décodage prévus en parallèle, un étage (500) de démultiplexage, prévu notamment pour l'aiguillage des signaux numériques codés reçus, soit vers ledit étage de décodage de longueurs, soit vers ledit étage de décodage des autres signaux codés ;

ledit étage (700) de décodage des autres signaux codés reçus comprenant lui-même :

(1) des moyens (701) de démultiplexage d'une part desdits autres signaux codés, et d'autre part des éventuels (L-K) signaux excédentaires non codés lors dudit codage avec protection sélective, lorsque la longueur L d'un bloc est supérieure à la capacité de codage K ;

(2) des moyens de décodage sélectif comprenant eux-mêmes un décodeur Blokh-Zyablov (703) à n circuits de décodage sélectif en parallèle, composé lui-même :

(a) d'une mémoire matricielle (730) de stockage des signaux de sortie dudit circuit de remplissage ;

(b) d'un circuit (731) de calcul de l'expression matricielle $R_i = R - C(k_1, k_2, ..., k_{i-1}, 0, ...0)$ où R est le contenu de ladite mémoire matricielle et C $(k_1, k_2, ..., k_{i-1}, 0, ...0)$ le mot de code obtenu lorsque tous les $k_i$ non encore décodés sont considérés comme égaux à zéro ;

(c) d'un circuit (732) de multiplication matricielle, en vue de la détermination de l'expression matricielle $M_i = (G\alpha)^{-1}.R_i$ où $(G\alpha)^{-1}$ est la matrice inverse de la matrice transposée de la matrice G suivante :

$$
G = \begin{bmatrix}
1 & 0 & 0 & 0.... & 0 \\
1 & 1 & 0 & 0.....0 \\
1 & 0 & 1 & 0.....0 \\
1 & 0 & 0 & 1.... & 0 \\
. & . & . & . & . \\
1 & 0 & 0....... & 1
\end{bmatrix} \quad ;
$$

(d) d'un dispositif de décodage (800), comprenant lui-même un circuit de démultiplexage (810), puis, en parallèle, lesdits n circuits de décodage sélectif (811, 812, 813, 814), suivis en série d'une mémoire matricielle (815) de stockage des signaux décodés présents en sortie desdits circuits de décodage et d'un circuit (733) de reconstitution de mots de code destiné à la mise à jour de l'expression C $(k_1, k_2, ..., k_{i-1}, 0, ...0)$ fournie audit circuit de calcul de l'expression matricielle $R_i$ ; et

(e) d'un circuit (734) de détection d'erreurs de transmission, en vue de la correction du décodage effectué par ledit dispositif de décodage, ledit circuit comprenant lui-même, pour la réalisation de (n-1) cycles de détection d'erreurs, des moyens de comparaison entre d'une part les colonnes de l'expression matricielle $R_i$ et d'autre part, pour les (n-1) niveaux de protection sélective autres que le premier, les ensembles $E_2$, $E_3$,..., $E_n$ des mots formés respectivement par combinaison des (n-1) dernières lignes de la matrice G, par combinaison des (n-2) dernières lignes de G, etc..., par combinaison des deux dernières lignes de G, et, formés, pour le n-ième niveau de protection sélective, à partir de la dernière ligne de G ;

(3) entre lesdits moyens de démultiplexage et de décodage sélectif, des moyens (702) de raccourcissement inverse, pour ajuster le format des signaux à décoder à la capacité desdits moyens de décodage sélectif lorsque la longueur L d'un bloc est inférieure à ladite capacité de codage K ;

(4) des moyens (704) de reclassement des signaux décodés suivant leur sensibilité aux erreurs de transmission ;

(5) des moyens (705) de mémorisation des signaux ainsi reclassés.


## Patentansprüche

1. System zur Kodierung von digitalen Signalen in Informationsblöcken mit einem Quellenkodierer und einem nachfolgenden Übertragungskanalkodierer, dadurch gekennzeichnet, daß wenn der Quellenkodierer ein Kodierungskreis veränderlicher Länge ist, der Kanalkodierer zum selektiven Schützen der Informationen, die für Übertragungsfehler am empfindlichsten sind, eine Reihenschaltung aufweist, bestehend aus einem Hilfskodierer mit selektivem Schutz vom Typ Blokh-Zyablov mit einem nachfolgenden Kodierer ohne solchen selektiven Schutz, wobei der genannte Hilfskodierer vom Typ Blokh-Zyablov die nachfolgenden Elemente aufweist:

(A) eine Kodierungsanordnung (100) zur Kodierung der Länge der Blöcke, wobei längs eines Blocks eine akkumulierte Länge von Kodeworten bestimmt wird, die von dem genannten Quellenkodierer geliefert werden und wobei die Kodierung der auf diese Weise bestimmten Blocklängen gewährleistet wird;

(B) eine Schaltungsanordnung (200) zum selektiven Schützen der genannten Blöcke durch Kodierung vom Typ Blokh-Zyablov, wobei diese Schaltungsanordnung an sich die nachfolgenden Elemente aufweist:

(a) eine Bitklassifikationsschaltung zum Klassifizieren in mehrere Klassen, je nach der Empfindlichkeit für Übertragungsfehler;

(b) selektive Kodierungsmittel (102) je nach der genannten Klassifizierung, wobei diese Mittel an sich wieder aus einer Demultiplexerschaltung (210) und nachfolgenden, parallel dazu liegenden selektiven Kodierungsschaltungen (211, 212, 213, 214) bestehen, mit ebensovielen Kodierungspegeln, wie es auf diese Weise bestimmte Klassen gibt, und wobei sich am Ausgang der Kodierungsschaltungen ein Matrixspeicher (215) vorgesehen ist zum Speichern der auf diese Weise kodierten Signale;

(c) am Ausgang der genannten selektiven Kodierungsmittel eine Matrix-Multiplizierschaltung (216) für auf diese Weise durch die transponierte Matrix $G^t$ der nachfolgenden Matrix G gebildete kodierte Signale:

$$G = \begin{bmatrix} 1000....000 \\ 1100......00 \\ 1010........0 \\ 1001........0 \\ .............. \\ .............. \\ .............. \\ 10.......100 \\ 100......010 \\ 1000....001 \end{bmatrix}$$

(d) eine selektive Verkürzungsschaltung (203) für das Ausgangssignal der genannten Matrixmultiplizierschaltung, wenn die Kodierungskapazität der genannten Hilfskodierschaltung mit selektivem Schutz größer ist als die Länge der Menge zu kodierender Signale;

(C) eine Multiplexerschaltung (300) mit Multiplexierungsmitteln für die Ausgangssignale der Längenkodierungsschaltungen (100, 200) mit selektivem Schutz.

2. Kodierungssystem nach Anspruch 1, dadurch gekennzeichnet, daß die Blocklängenkodierungsanordnung (100) die nachfolgenden Elemente aufweist:

(A) Mittel zum Bestimmen der Länge jedes Blocks nach der Kodierung mit veränderlicher Länge, wobei diese Mittel an sind die nachfolgenden Elemente aufweisen:

(a) eine Bitzählerschaltung (101) zum für jeden Block Zählen der Anzahl Bits der kodierten Signale mit veränderlicher Länge, die von dem Quellenkodierer geliefert werden zusammen mit jedem Block;

(b) einen Speicher (103) zum Speichern des Ausgangssignals der genannten Bitzählerschaltung;

(B) Mittel zum Zählen der Anzahl Blöcke, deren Länge bestimmt worden ist, wobei diese Mittel die nachfolgenden Elemente aufweisen:

(c) eine Schaltungsanordnung (102) zum Zählen der Blöcke ausgehend von Signalen, die das Ende eines Blocks angeben und ebenfalls von dem genannten Quellenkodierer geliefert werden;

(d) eine Entscheidungsschaltung (104) zur Steuerung des Auslesens des Speichers ausgehend von der Anzahl vorgespeicherter Blöcke; (C) Längenkodierungsmittel, welche die nachfolgenden Elemente aufweisen:

(e) eine Kodierungsschaltung (105) zum Liefern der Worte für die Längenkodierung der genannten Blöcke.

3. Kodierungssystem nach einem der Ansprüche 1 und 2, dadurch gekennzeichnet, daß die Multiplexierstufe ebenfalls Mittel (302) aufweist zur Regelung der Menge an Ausgangssignalen der genannten Multiplexierungsmittel, und daß, wenn die Länge L des betreffenden Blocks die Kodierungskapazität K der genannten selektiven Schutzstufe übersteigt, die genannten Multiplexierungsmittel ebenfalls zur Gewährleistung der Multiplexierung der nicht-kodierten (L-K) Bits vorgesehen sind.

4. Kodierungssystem nach einem der Ansprüche 1 bis 3, dadurch gekennzeichnet, daß die Bitsklassifizierungsschaltung einen Speicher (201) aufweist, der dazu vorgesehen ist, in einer ersten Speicherzone die kodierten Signale mit veränderlicher Länge von dem Quellenkodierer zu empfangen und in einer zweiten Speicherzone wegen der Adressierung der ersten Speicherzone zum Liefern der genannten kodierten Signale in einer je nach der genannten Adressierung geänderten Ordnung, den Rang der genannten kodierten Signale.

5. Dekodierungssystem zum Dekodieren digitaler Signale, die vorher einer Kodierung in einer Kodierungskette veränderlicher Länge ausgesetzt worden sind, mit einem nachfolgenden Kanalkodierer, der an sich wieder eine Kodierungsanordnung vom Typ Blokh-Zyablov mit selektivem Informationsschutz enthält, mit einem nachfolgenden Kodierer ohne solchen selektiven Schutz, wobei das Dekodierungssystem einen Übertragungskanaldekodierer (40) aufweist mit einem nachfolgenden Quellendekodierer (50), wie eine Dekodierungskette veränderlicher Länge, dadurch gekennzeichnet, daß der Kanaldekodierer in einer Reihenschaltung eine Hilfsdekodierschaltung (400) aufweist mit nicht selektivem Schutz, mit einer nachfolgenden Hilfsdekodierschaltung mit selektivem Schutz, die an sich wieder die nachfolgenden Elemente aufweist:

(A) eine Längendekodierungsstufe (600) um es zu ermöglichen, daß während jedes Dekodierungsvorgangs diejenigen empfangenen Signale dekodiert werden, welche den Längen der genannten Blöcke entsprechen;

(B) eine Dekodierungsstufe (700) für die anderen empfangenen kodierten Signale;

(C) hinter den genannten Dekodierungsstufen in Parallelschaltung eine Demultiplexerschaltung (500), insbesondere zum Schalten der empfangenen kodierten digitalen Signale, entweder zu der genannten Längendekodierstufe oder zu der genannten Stufe zum Dekodieren der anderen kodierten Signale;

wobei diese Dekodierstufe (700) zum Dekodieren der anderen empfangenen kodierten Signale an sich die nachfolgenden Elemente aufweist:

(1) Demultiplexierungsmittel (701) zum Demultiplexen einerseits der genannten anderen kodierten Signale, und andererseits der etwaigen nicht-kodierten Signale (L-K) von der genannten Kodierung mit selektivem Schutz, wenn die Länge L eines Blocks die Kodierungskapazität K übersteigt;

(2) selektive Dekodierungsmittel, die an sich einen Blokh-Zyablov-Dekodierer (703) mit n parallele selektive Dekodierungsschaltungen aufweisen, die an sich aus den nachfolgenden Elementen bestehen:

(a) einem Matrixspeicher (730) zum Speichern von Ausgangssignalen der genannten Füllschaltung;

(b) einer Rechenschaltung (731) zum Berechnen des Matrixausdrucks $R_i = R - C (k_1, k_2, ...k_{i-1}, 0, ... 0)$, wobei R der Inhalt des genannten Matrixspeichers ist und $C (k_1, k_2, ...k_{i-1}, 0, ... 0)$ das Kodewort, das erhalten wird, wenn alle $k_1$, die bisher noch nicht dekodiert wurden, als gleich Null betrachtet werden;

(c) einer Matrixmultiplikationsschaltung (732) zur Bestimmung des Matrixausdrucks $M_i = (G\alpha)^{-1}.R_i$, wobei $(G\alpha)^{-1}$ die Inverse der transponierten Matrix der nachfolgenden Matrix G ist:

$$G = \begin{bmatrix} 1000.......0 \\ 1100.......0 \\ 1010.......0 \\ 1001.......0 \\ ................. \\ 100.......01 \end{bmatrix}$$

(d) einer Dekodieranordnung (800), die an sich eine Demultiplexierschaltung (810) aufweist und in Parallelschaltung n selektive Dekodierschaltungen (811, 812, 813, 814), denen in Reihenschaltung aus einem Matrixspeicher (815) für dekodierte Signale an den Ausgängen der genannten Dekodierschaltungen und einer Rekonstruktionsschaltung (733) für Kodeworte folgt, wobei diese Schaltungsanordnung zur Aktualisierung des Ausdrucks $C (k_1, k_2, ...k_{i-1}, 0, ... 0)$ vorgesehen ist, der der genannten Schaltungsanordnung zur berechnung des Matrixausdrucks $R_1$ zugeführt wird; und

(e) einer Übertragungsfehlerdetektionsschaltung (734) zum Korrigieren der von der genannten Dekodierschaltung durchgeführten Dekodierung, wobei diese Übertragungsfehlerdetektionsschaltung vorzugsweise eine derartige Struktur hat, daß sie zum Verwirklichen der (n-1)-Zyklen von Detektionsfehlern Mittel aufweist zum Vergleichen der Spalten des Matrixausdrucks $R_i$ einerseits und für die (n-1) Pegel des selektiven Schutzes anders als den ersten Pegel, die Gebilde $E_2$, $E_3$, ..., $E_n$ der Worte andererseits, wobei diese Worte durch Kombination der (n-1) letzten Zeilen der Matrix G gebildet werden, durch Kombination der (n-2) letzten Zeilen von G, usw......, und durch Kombination der letzten zwei Zeilen von G, bzw. die aus der letzten Zeile von G für den n. selektiven Schutzpegel gebildet werden;

(3) zwischen den genannten Demultiplexermitteln und den selektiven Dekodierungsmitteln inverse Kürzungsmittel (702) zum Einstellen des Formats der zu dekodierenden Signale auf die Kapazität der genannten selektiven Dekodierungsmittel , wenn die Länge L eines Blocks kleiner ist als die genannte Kodierungskapazität K;

(4) Reklassierungsmittel (704) zum Reklassieren der dekodierten Signale nach ihrer Empfindlichkeit für Übertragungsfehler;

(5) Speichermittel (705) für auf diese Weise reklassierte Signale.

## Claims

1. A system for coding digital signals arranged in information blocks, comprising a source coder followed by a transmission channel coder and characterized in that, for the case where the source coder is a variable-length coding circuit, the channel coder comprises a series arrangement, for the selective protection of information components which are most sensitive to transmission errors, of a coding sub-assembly with selective protection of the Blokh-Zyablov type, followed by a coder without such a selective protection, said coding sub-assembly of the Blokh-Zyablov type comprising:

(A) a stage (100) for coding the block lengths so as to determine along a block an accumulated length of code words supplied by said source coder and to ensure the coding of block lengths thus determined;

(B) a stage (200) for selective protection of said blocks by Blokh-Zyablov coding, comprising:

(a) a circuit for classifying the bits in several classes in accordance with their sensitivity to transmission errors;

(b) means (102) for selective coding as a function of said classification, which means are composed of a demultiplexing circuit (210) and subsequently, in parallel, circuits (211, 212, 213, 214) for selective coding at as many coding levels as there are classes thus determined, and, at the outputs of these coding circuits, a matrix memory (215) for storing the signals thus coded;

(c) at the output of said means for selective coding, a circuit (216) for matrix multiplication of the coded signals thus constituted by the transposed matrix $G^t$ of the following matrix G:

$$G = \begin{bmatrix} 1\ 0\ 0\ 0.... \ 0\ 0\ 0 \\ 1\ 1\ 0\ 0...... \ 0\ 0 \\ 1\ 0\ 1\ 0........ \ 0 \\ 1\ 0\ 0\ 1........ \ 0 \\ ................. \end{bmatrix}$$

$$\begin{bmatrix} \cdots\cdots\cdots\cdots \\ \cdots\cdots\cdots\cdots \\ 1\ 0 \cdots\cdots\cdots 1\ 0\ 0 \\ 1\ 0\ 0 \cdots\cdots 0\ 1\ 0 \\ 1\ 0\ 0\ 0 \cdots 0\ 0\ 1 \end{bmatrix}$$

(d) a circuit (203) for selective reduction of the output signal of said matrix multiplication circuit when the coding capacity of said coding sub-assembly with selective protection is larger than the length of the quantity of signals to be coded;

(C) a multiplexing stage (300) comprising means for multiplexing the signals supplied by said length coding and selective protection stages (100, 200).

2. A coding system as claimed in Claim 1, characterized in that the stage (100) for coding the block length comprises:

(A) means for determining the length of each block after the variable-length coding, the means comprising

(a) a bit counting circuit (101), arranged for counting for each block the number of bits of the coded signals supplied by the source coder in association with each block;

(b) a memory (103) for storing the output signal of said bit counting circuit;

(B) means for counting the number of blocks whose length has been determined, which means comprise:

(c) a circuit (102) for counting blocks from signals which indicate the end of a block and are also supplied by said source coder;

(d) a decision circuit (104) for controlling reading of said memory as a function of a preregistered number of blocks;

(C) length coding means, comprising

(e) a coding circuit (105) for supplying the words for coding the lengths of said blocks.

3. A coding system as claimed in any one of Claims 1 and 2, characterized in that the multiplexing stage also comprises means (302) for controlling the rate of the output signals from said multiplexing means, and in that, when the length L of the block considered exceeds the coding capacity K of said selective protection stage, said multiplexing means are provided for ensuring also the multiplexing of the non-coded surplus (L-K) bits.

4. A coding system as claimed in any one of Claims 1 to 3, characterized in that the circuit for classifying the bits comprises a memory (201) arranged for receiving in a first memory section, the variable-length coded signals from the source coder, and in a second memory section the rank of said coded signals for addressing said first memory section and for supplying said coded signals in a sequence which is modified as a function of said addressing.

5. A system for decoding digital signals which were previously processed in a system for coding digital signals arranged in information blocks, comprising a variable-length coding circuit followed by a channel coder which comprises a coding sub-assembly of the Blokh-Zyablov type with selective protection of information components, followed by a coder without such a selective protection, said decoding system comprising a transmission channel decoder (40) followed by a source decoder (50) such as a variable-length decoding circuit, characterized in that the channel decoder comprises, in series, a decoding sub-assembly (400) with non-selective protection, followed by a decoding sub-assembly with selective protection, comprising:

(A) a length decoding stage (600), arranged for decoding, during each decoding operation, those received signals which correspond to the length of said blocks;

(B) a stage (700) for decoding other received coded signals;

(C) upstream of said parallel decoding stages, a demultiplexing stage (500) particularly provided for switching the received coded digital signals either to said length decoding stage or to said stage for decoding the other coded signals;

said stage (700) for decoding other received coded signals comprising:

(1) means (701) for demultiplexing said other coded signals, and also any noncoded surplus (L-K) signals from said coding with selective protection, when the length L of a block exceeds the coding capacity K;

(2) selective decoding means comprising a Blokh-Zyablov decoder (703) having n parallel-arranged selective decoding circuits, composed of

(a) a matrix memory (730) for storing the output signals of said filler circuit;

(b) a circuit (731) for calculating the matrix expression $R_i = R-C(k_1, k_2, ..., k_{i-1}, 0, ..., 0)$ wherein R is the content of said matrix memory and $C(k_1, k_2, ..., k_{i-1}, 0, ..., 0)$ is the code word obtained when all the $k_i$ values which have not yet been decoded are considered to be equal to zero;

(c) a circuit (732) for matrix multiplication in view of determining the matrix expression $M_i = (G\alpha)^{-1}$, $R_i$ wherein $(G\alpha)^{-1}$ is the inverse matrix of the transposed matrix of the following matrix G:

$$G = \begin{bmatrix} 1\ 0\ 0\ 0\ ...\ 0 \\ 1\ 1\ 0\ 0\ ...\ 0 \\ 1\ 0\ 1\ 0\ ...\ 0 \\ 1\ 0\ 0\ 1\ ...\ 0 \\ ............ \\ 1\ 0\ 0\ .......1 \end{bmatrix}$$

(d) a decoding device (800) comprising a demultiplexing circuit (810), subsequently, arranged in parallel, said n selective decoding circuits (811, 812, 813, 814) followed by a series arrangement of a matrix memory (815) for storing the decoded signals present at the output of said decoding circuits and a code word recovery circuit (733) for recovering the code words intended for updating the expression $C(k_1, k_2, ..., k_{i-1}, 0, ..., 0)$ applied to said circuit for calculating the matrix expression $R_i$; and

(e) a transmission error detection circuit (734), with a view to correcting the decoding effected by said decoding device, said circuit comprising, for realising the (n-1) cycles of detecting errors, means for comparing the columns of the matrix expression $R_i$ on the one hand and for the (n-1) levels of selective protection other than the first level, the sets $E_2, E_3, ..., E_n$ of the words on the other hand, which words are formed by combining the (n-1) last lines of the matrix G, by combining the (n-2) last lines of G, etc. ...., and by combining the last two lines of G, and which are formed from the last line of G for the $n^{th}$ selective protection level, respectively;

(3) between said demultiplexing and selective decoding means, inverse reducing means (702) for adapting the format of the signals to be decoded to the capacity of said selective decoding means when the length L of a block is less than said coding capacity K;

(4) means (704) for reclassifying the decoded signals in accordance with their sensitivity to transmission errors;

(5) storage means (705) for storing the signals thus reclassified.

EP 0 436 251 B1

FIG. 1

FIG. 2

FIG. 3

FIG. 4

FIG. 5

FIG.6

FIG.7

FIG.8

FIG.9